# EUROPEAN PATENT SPECIFICATION

(11) **EP 3 821 285 B1**
(45) Date of publication and mention of the grant of the patent: **06.09.2023**
(21) Application number: 18740771.3
(22) Date of filing: 09.07.2018
(51) Int. Cl.: G02B 6/44, B65D 5/498, B65D 81/00, B65H 55/00, B65D 85/67, B65H 75/00, B65D 85/04, B65H 49/08, B65H 75/36

(54) **OPTICAL FIBER INSTALLATION KIT AND CORRESPONDING METHODS FOR USING AND MANUFACTURING THE SAME**
INSTALLATIONSKIT FÜR OPTISCHE FASERN UND ENTSPRECHENDE VERFAHREN ZUR VERWENDUNG UND HERSTELLUNG DAVON
KIT D'INSTALLATION D'UNE FIBRE OPTIQUE ET PROCÉDÉS CORRESPONDANTS D'UTILISATION ET DE FABRICATION DE CELUI-CI

(43) Date of publication of application: 19.05.2021
(73) Proprietor: Prysmian S.p.A., 20126 Milan (IT)
(72) Inventor: LAVENNE, Alain, 20126 Milan (IT); PIRRI, Alessandro, 20126 Milan (IT); LE DISSEZ, Arnoud, 20126 Milan (IT); GARCIA, Marta, 20126 Milan (IT); TATAT, Olivier, 20126 Milan (IT)
(74) Representative: Vidon Brevets & Stratégie
(86) International application number: PCT/EP2018/068542
(87) International publication number: WO 2020/011334

(56) References cited:
- WO-A1-2015/161863
- WO-A1-2018/010783
- JP-U- S59 126 818
- US-A1- 2006 183 362

## Description

### 1. Technical field

The present invention relates generally to optical fibers installation kits, notably, but not exclusively, for FTTH ("Fiber To The Home") network access. In particular, the invention relates to an optical fiber installation kit comprising a storage box, an optical fiber cable, and an optical termination module.

### 2. Background Art

A FTTH network is a physical telecommunication network that allows very high-speed Internet access and in which the optical fiber terminates at the user's home or business premises. FTTH network corresponds to the deployment of the optical fiber cable from an optical connection node to the user's home or business premises. The optical connection node corresponds to the location of the operator's transmission equipment. Thus, the user receives the optical signal directly from the source.

The significant technical features of FTTH network are not only providing greater bandwidth, but also enhancing the transparency of the network to data formats, rates, wavelengths, and protocols and simplifying maintenance and installation.

FTTH network installation requires an optical fiber cable to be pulled between the optical connection node and the inside of the user's home. Thus, a FTTH network connection requires the installation of an optical termination module, also called connecting box, inside the user's home. The optical fiber cable is then connected, on the one hand, to the connecting box located at the user's home and on the other hand, to the optical connection node.

With the growth of FTTH networks, many different optical fiber installation kits have been developed. These optical fiber installation kits usually contain an optical termination module and an optical fiber cable, which needs to be pulled trough an inner conduit within the user's home to the optical connection node. Most installation kits on the market offer to store the optical fiber cable on a reel.

Patent document EP 2 264 502 discloses a device with a connecting box for mechanically connecting optical fibers of user to optical fibers that are arranged in the box and obtained from a fiber supply cable. The fiber supply cable is connected to the connecting box and wound on a winding unit e.g. reel. The connecting box and the winding unit are arranged inside an envelope. The envelope is provided with an opening permitting unwinding of the fiber supply cable outside the envelope.

However, for such disposable optical installation kits, the reel undergoes frictions when unwinding the optical fiber cable, which may cause the cable to get stuck or get damaged. Also, torsion may be generated in the optical fiber cable when the cable is coiled from the reel without rotating the reel.

Patent document US 7,330,627 discloses a cable arrangement, which includes a length of springy cable looped in a figure-8 arrangement with an intermediate cross over section between respective first and second looped sections of the cable. The figure-8 arrangement enables withdrawal of the cable from the arrangement with no more than a single twist of the cable to limit accumulated net linear twist of the cable while linearly extending the cable. The first and second looped sections may be positioned overlapping each other to provide a substantially toroid shaped cable arrangement. An optical device may be provided on one or both of the ends of the length of cable. The springy cable may be a fiber optic cable, such as flat drop cable.

Such a figure-8 arrangement is convenient, as it enables withdrawal of the cable from the arrangement without any friction or accumulated torsion and avoids damages to the optical fiber cable. Actually, by laying the coils in figure 8 patterns one above the other, the cable undergoes a twist about its axis each time. However, the twist in one turn is clockwise followed by one turn anti-clockwise, in the next turn. Thus, when the cable is eventually pulled from the coiled shape, it may not accumulate a net twist.

However, one drawback of this kind of optical installation kit is that installation of the optical fiber cable in an internal conduit up to the optical connection node requires unwinding the whole length of cable before the installation, as only one end of the optical fiber cable can be accessed through an opening in the housing. Thus, the installation of the optical fiber cable in the conduit up to the optical connection node is complicated and can cause damages to the cable, as well as entanglement.

No conventional optical fiber installation kit for optical fiber network access, and especially for FTTH network allows an optimized storage of the optical fiber cable, the connecting box and accessories, nor a simple use of this optical fiber installation kit in respect of the integrity of the optical fiber cable.

US 2006/183362 A1 discloses a fiber optic cable arrangement including a length of springy cable looped in a figure 8 arrangement with an intermediate cross-over section between respective first and second looped sections of the cable. The figure 8 arrangement enables withdrawal of the cable from the arrangement with no more than a single twist of the cable to limit accumulated net linear twist of the cable while linearly extending the cable. The first and second looped sections are positioned overlapping each other to provide a substantially toroidal shaped cable arrangement. An optical device is provided on one or both of the ends of the length of cable.

### 3. Summary

An object of the present disclosure is to alleviate the drawbacks and insufficiencies resulting from the above-mentioned prior art.

The invention relates to an optical fiber installation kit according to claim 1. Different aspects are set out in the dependent claims.

Such an optical fiber installation kit is particularly useful for installing an optical termination module and its optical fiber cable in an internal conduit up to the optical connection node for optical fiber network access.

In particular, such an optical fiber installation kit is of reduced format and easily transportable for convenient use in optical fiber network access, and in particular FTTH user connection in the inside of the user's home.

The inclined plate advantageously allows reducing to a minimum the storage space of the optical fiber cable when associated with a folded figure-8 arrangement of the optical fiber cable.

To this purpose, the optical fiber installation kit comprises a container, or box, that is separated into two distinct areas by an inclined plate, which shape and design allow defining a first storage area, aimed at storing the optical fiber cable and a second storage area, aimed at storing other components such as the optical termination module and corresponding accessories.

More precisely, a compartment surrounded by the box is divided into two distinct parts by the inclined plate, also called intermediate plate, namely a first wedge-shaped storage area and a second wedge-shaped storage area. The first wedge-shaped storage area is used for optical fiber cable storage without unwinder holder and the second wedge-shaped storage area for optical termination module, optical pickup accessories, mounting bracket and related accessories storage. In the first wedge-shaped storage area, a length of the optical fiber cable is looped in a figure 8 arrangement, with first and second looped sections of the cable overlapping each other.

This packaging configuration allows easy unwinding by simply pulling the optical fiber cable without using supports or devices, such as drums or reels, thus facilitating the optical fiber cable installation operation. Indeed, the figure-8 arrangement confers a simple unwinding without generating torsion or other constraint being able to disturb installation operation, as it is possible to linearly extend the length of cable with no more than a single twist of the cable.

Hence, the folded figure-8 arrangement of the optical fiber cable allows the optical fiber cable to be pulled without twisting, friction, jamming, tangling or other problems prone to affect its installation. Conditioning the cable in a figure-8 arrangement in the installation kit allows achieving an optical fiber cable installation without generating any particular stress, braking, or blocking of the optical fiber cable.

According to an aspect, the inclined plate is detachably arranged into the box.

Hence, it may be very easily removed from the box, without having to tear it apart, in order to offer access to the optical fiber cable stored in the first wedge-shaped storage area, or to gain access to the optical termination module stored in the second wedge-shaped storage area once the optical fiber cable is unwounded out of the box.

According to another aspect, the second wedge-shaped storage area is located between an upper lid of the box and said inclined plate, and the first wedge-shaped storage area is located between the inclined plate and a bottom part of the box.

Hence, when the box lies on the floor, the second wedge-shaped storage area is in the upper part of the box, while the first wedge-shaped storage area is below the second wedge-shaped storage area, in a lower part of the box.

According to another aspect, the box comprises a hole system through which a second end of the optical fiber cable is pulled out of the box, said hole system being arranged in a sidewall of a wide part of the first wedge-shaped storage area.

Hence, the optical fiber cable may be released continuously from the box, through the hole system, which avoids problems of entanglement. Moreover, the hole system allows for a continuous access to the length of optical cable in one piece without tearing or guide destruction.

According to another aspect, the inclined plate is a N-shaped plate with a medium plane part and two opposite ends comprising:
- a first end folded upward which comprises a first notch through which the first end of the optical fiber cable is routed to the second wedge-shaped storage area;
- a second end folded downward which comprises a second notch through which the second end of the optical fiber cable is pulled out of the box through said hole system.

According to this embodiment, the inclined plate has a N-shape which advantageously allows optimizing the space by divided the box into two wedge-shaped storage areas. Moreover, such a N-shape helps in detachably arranging the inclined plate within the box, as the first end of the plate, which is folded upward may lean against a back sidewall of the box, while the second end of the plate, which is folded downward may lean against a front sidewall of the box.

The first notch arranged in the first end of the inclined plate allows the first end of the optical fiber cable to be routed to the second wedge-shaped storage area. The second notch of the second opposite end faces the hole system of the box to allow the second end of the optical fiber cable to be routed out of the box.

According to another aspect, the second wedge-shaped storage area also stores at least one optical termination module accessory.

For example, the optical termination module, optical pickup accessories, mounting bracket and related accessories are all stored in the second wedge-shaped storage area. The optical fiber cable is stored in another storage area corresponding to the first wedge-shaped storage area. The optical termination module, optical pickup accessories, mounting bracket and related accessories are advantageously directly accessible without altering the packaging area of the optical fiber cable.

This packaging arrangement allows space to be reduced and optimized. Thus, raw materials and manufacturing operations for the production of the product are reduced.

According to another aspect, the box and the inclined plate are made of cardboard material, notably recycle cardboard, which is cheap and environment friendly.

According to another aspect, the upper lid, the bottom part of the box and the medium plane part of the inclined plate are square-shaped.

It thus allows the two looped sections of the folded figure 8 arrangement to be circular, which reduces stress on the length of optical cable, while stored in the installation kit.

The invention also concerns a method for using an optical fiber installation kit according to claim 9. Another aspect is set out in dependent claim 10.

Hence, using the optical fiber installation kit provides a simple way to pull the optical fiber cable into an internal conduit up to the optical connection node for installing a FTTH network at a user's premises.

To this purpose, unwinding the length of the optical fiber cable is preceded by pulling a second end of the optical fiber cable out of the box trough a hole system arranged in a sidewall of a wide part of the first wedge-shaped storage area. A pulling system may be used and the optical fiber cable easily unwinds thanks to its figure-8 arrangement. The optical fiber cable is fully unwound after being installed in an internal conduit up to the optical connection node. After opening the upper lid of the box, the inclined plate is removed to release the optical terminal module and cable part of its packaging, without tearing or other constraining manipulations.

Thus, the optical fiber installation kit makes it possible to store and install, in one piece, guaranteeing the integrity and continuity of an optical fiber cable which two ends are equipped with equipment either facilitating installation in internal conduit for one end, or connected to a pre-mounted optical termination module on the other end.

The invention also relates to a method for manufacturing an optical fiber installation according to claim 11. Different aspects are set out in the dependent claims.

According to a further aspect, when folding the figure 8 arrangement, a second end of the optical fiber cable is arranged between said first and second looped sections. This optical fiber cable arrangement allows the cable to be pulled for installation, without generating friction, jamming or other problems affecting its implementation.

According to a further aspect, arranging said inclined plate into the box comprises folding said plate into a N-shaped plate with a medium plane part and two opposite ends, and
- detachably arranging a first end folded upward on a back side wall of said box;
- detachably arranging a second end folded downward on a front side wall of said box with a notch facing a hole system of said box, through which the second end of the optical fiber cable is routed out of the box. Moreover, routing the first end of the optical fiber cable to the second wedge-shaped storage comprises routing said first end of the optical fiber cable through another notch arranged in the first end of the N-shaped plate.

### 4. Brief description of the drawings

The invention can be better understood with reference to the following description and drawings, given by way of example and not limiting the scope of protection, and in which:
- **figures 1A and 1B** are schematic views of a box and an inclined plate of an installation kit according to one embodiment of the present disclosure;
- **figure 2** is a schematic view of the folding process of an optical fiber cable looped in a figure-8 arrangement according to one embodiment of the present disclosure;
- **figure 3** is a schematic side view of an optical installation kit comprising a box divided into two parts by an inclined plate and storing a folded optical fiber cable looped in a folded figure-8 arrangement according to one embodiment of the present disclosure;
- **figures 4A and 4B** are views of the packaging of an optical fiber cable looped in a folded figure-8 arrangement and an optical terminal module according to the embodiment of **figure 3****;**
- **figures 5A and 5B** show detail views of the packaging of an optical terminal module in the second wedge-shaped storage area according to the embodiment of **figure 3****;**
- **figure 6** is a detail view of the hole system of the box facing a notch arranged in a second opposite end of the inclined plate according to the embodiment of **figure 3****;**
- **figures 7A and 7B** are schematic side views of the process for using an optical installation kit, as shown in **figure 3****,** comprising a box divided into two parts by an inclined plate and a folded optical fiber cable looped in a folded figure-8 arrangement which is pulled out of the box.

### 5. Detailed description

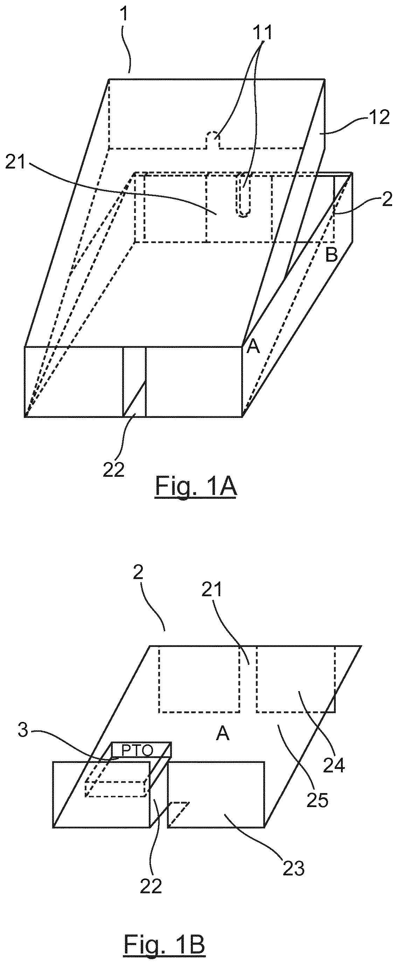

The present invention relates to an optical fiber installation kit, which may advantageously be used for deploying optical fiber network access. Many specific details of the invention are set forth in the following description and in **figures 1 to 7****.**

**Figures 1A and 1B** schematically illustrate an embodiment of a box 1 and an inclined plate 2 for an optical fiber installation kit. The box 1 and the inclined plate 2, also called intermediate plate, are for example made of cardboard, and more than 95% recyclable. Their shape and their dimensions can vary and it can be adapted to needs. For example the standard box is 28x27x6cm. The box 1 and the inclined plate 2 also include physical resistance characteristics for handling and storing such as resistance to shock, crushing, humidity and temperature variations.

**Figure 1A** illustrates the box 1 which comprises a cover, or upper lid, 12 that closes the box 1 and a detachable inclined plate 2. The box 1 surrounds a compartment that is divided by the inclined plate 2 into a first wedge-shaped storage area B and a second wedge-shaped storage area A. The first wedge-shaped storage area B is situated under the second wedge-shaped storage area A and is used for optical fiber cable 41 storage (not illustrated). The second wedge-shaped storage area A is directly accessible for the user when opening the cover 12. The second wedge-shaped storage area A is used for storing an optical termination module 3, optical pickup accessories, a mounting bracket and related accessories (not illustrated).

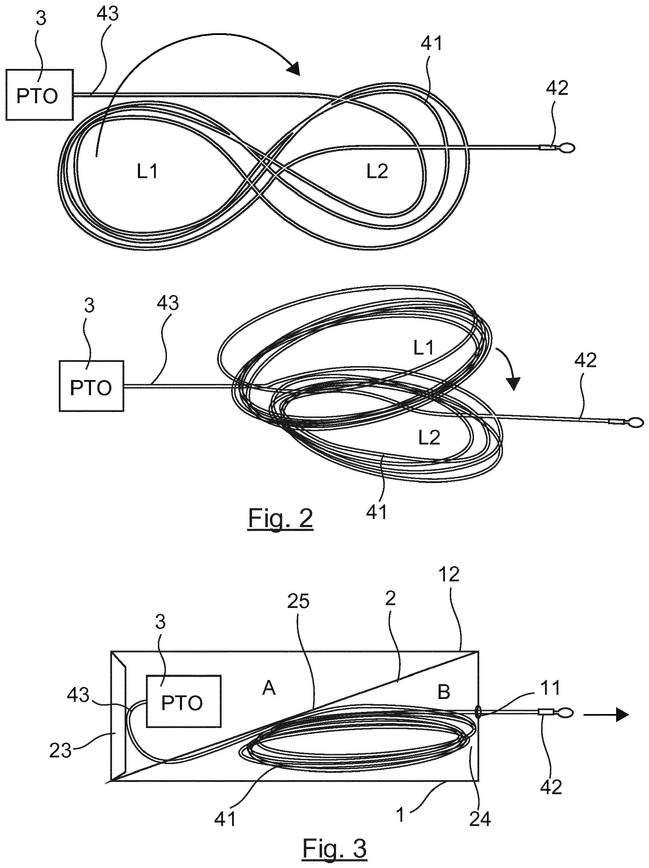

The box 1 and the cover 12 comprise a hole system 11 for optical fiber cable 41 access. This hole system 11 comprises for example a notch in a sidewall of the box 1 and an other notch in a sidewall of the cover 12 facing the notch in the sidewall of the box 1. Both notches are for example substantially in the middle of the box and cover sidewalls. As it will be illustrated with **figure 3** these opposite notches allow the cover 12 to form a hole with the box 1 once closed which allow the second end of the optical fiber cable 42 to be easily pulled out of the box 1.

**Figure 1B** illustrates the inclined plate 2, which comprises a first end 23 folded upward, a second opposite end 24 folded downward and a central plane inclined part 25. The first end 23 comprises a first notch 22 and the second opposite end 24 comprises a second notch 21.

The second notch 21 is for example substantially located in the middle of the second opposite end 24. When the inclined plate 2 is placed in the box 1, the second notch 21 is placed in front of the hole system 11, as illustrated in **figure 1A****.** The second notch 21 and the hole system 11 allow the second end of the optical fiber cable 42 to be pulled out of the box 1.

The first notch 22 is for example substantially located in the middle of the first end 23 of the inclined plate 2. The first notch 22 extends in part on the central inclined part 25 of the inclined plate 2. The first notch 22 allows the first end 43 of the optical fiber cable to be routed from the narrow part of the first wedge-shaped storage area B to the second wedge-shaped storage area A.

The inclined plate 2 divides the compartment surrounded by the box 1 and creates two distinct storage areas. Thus, the storage space is optimized to receive the optical fiber cable 41 and the optical terminal module 3 or other accessories for example optical pickup accessories, mounting bracket and related accessories.

**Figure 2** illustrates an embodiment of the process for coiling and folding an optical fiber cable 41 looped in a figure-8 arrangement. The length of optical fiber cable 41 comprises a first end 43, which is attached to an optical terminal module 3 and a second end 42, which comprises a conventional pulling or pushing system for installation.

In the present example, after being looped in a figure-8 arrangement, a first looped section L1 of the optical fiber cable 41 is folded over a second looped section L2 of the optical fiber cable 41. The second end 42 is placed between the two looped sections L1 and L2 of the folded optical fiber cable 41 looped. Thus, the first end 43 and the second end 42 are on opposite sides of the optical fiber cable 41 looped in a figure-8 arrangement.

By laying the coils in figure 8 patterns one above the other, the optical fiber cable undergoes a twist about its axis each time. However, the twist in one turn is clockwise followed by one turn anti-clockwise, in the next turn. This pattern is repeated over and over as the figure 8 coils are laid down over each other.

The optical fiber cable 41 includes at the second end 42 a pulling or pushing system for installation of the optical cable 41 in an internal conduit up to an optical connection node, and at the other end an optical terminal module 3 for the user. These accessories are for example pre-installed on the optical fiber cable 41.

Once coiled and folded, the length of optical fiber cable with a figure 8 arrangement may be laid in a box, as shown in **figure 3****.**

**Figure 3** schematically shows an optical fiber installation kit according to one embodiment comprising a box 1 surrounding a compartment divided into two parts by an inclined plate 2, namely a first wedge-shaped storage area B and a second wedge-shaped storage area A.

In this example, the cross over section of the folded figure-8 arrangement of optical fiber cable 41 is placed near the narrow part of the first wedge-shaped storage area B. In other words, when the respective looped sections of the optical fiber cable are positioned overlapping each other, they extend from the intermediate cross-over section therebetween at an acute angle. This intermediate cross-over section is hence advantageously placed in the narrower part of the first wedge-shaped storage area.

The second end 42 of the optical cable 41 is pulled out of the box from the larger part of the first wedge-shaped storage area B trough the second notch 21 (not illustrated) of the second opposite end 24 of the inclined plate 2 and the hole system 11 of the box 1. The optical terminal module 3 is stored in the second wedge-shaped storage area A. The first end 43 of the optical cable is routed from the narrow part of the first wedge-shaped storage area B to the second wedge-shaped storage area A trough the first notch 22 of the first end 23 of the inclined plate 2. As it can be seen in this example, the second wedge-shaped storage area A is placed on the top of the first wedge-shaped storage area B. This configuration allows a direct access for the user to the optical terminal module 3 without disturbing the optical fiber cable 41 arrangements.

The optical installation kit contains a length of user optical fiber cable used for standard optical fiber network, for example FTTH installations, between 5m and 50m for example.

In another example, the packaging could be done on 30m, but it is possible to store up to 50m of optical fiber cable 41 according to the shape of the box that can be adapted to needs.

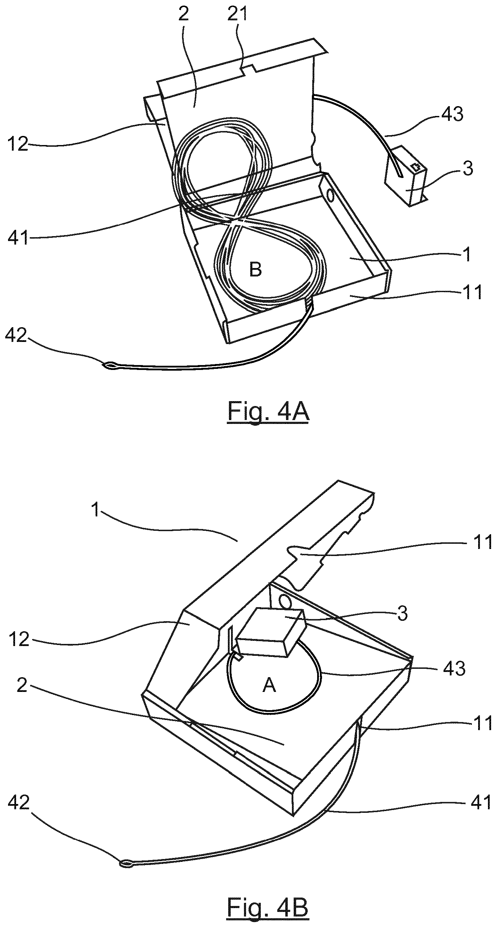

According to the embodiment of **figure 3****,** **figures 4A and 4B** show the optical fiber cable 41 looped in a figure-8 arrangement and placed in the box 1. More particularly, the optical fiber cable 41 is stored in the first wedge-shaped storage area B with the cross over section placed in the narrow part of this wedge-shaped storage area B, as defined by the inclined plate 2. The optical fiber cable 41 is folded with the second end 42 arranged between the two looped sections of the folded optical fiber cable 41. After detachably arranging the inclined plate 2 in the box 1, the second end 42 goes through the hole system 11 and through the second notch 21 of the second opposite end 24 of the inclined plate 2 (not illustrated). The first end 43 attached to the optical terminal module 3 is routed through the first notch 22 of the first end 23 of the inclined plate 2 (not illustrated) and the optical terminal module 3 can be stored in the second wedge-shaped storage area A as shown in **figure 4B****.**

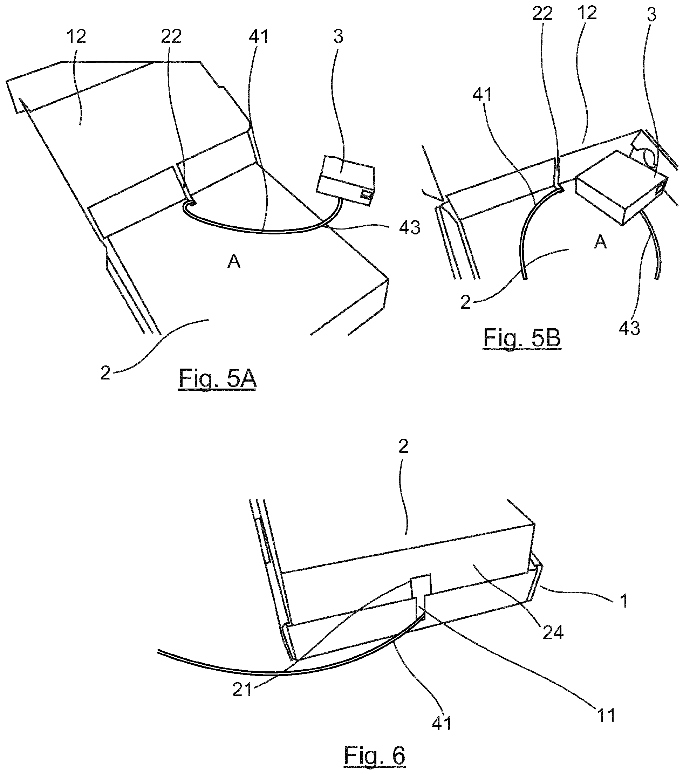

**Figures 5A and 5B** show the packaging details of an optical terminal module 3 in the second wedge-shaped storage area A according to the embodiment of **figure 3****.** The first notch 22 of the inclined plate 2 is placed on top of the optical cable 41. The first end 43 of the optical fiber cable 41 attached to the optical terminal module 3 is routed from the narrow part of the first wedge-shaped storage area B (not illustrated) to the second wedge-shaped storage area A.

The second end 42 of the optical cable 41 is pulled out of the box 1 from the larger part of the first wedge-shaped storage area B and goes through the second notch 21 and the hole system 11. The second notch 21 of the second opposite end 24 of the inclined plate 2 is placed facing the hole system 11 as shown in **figure 6****.**

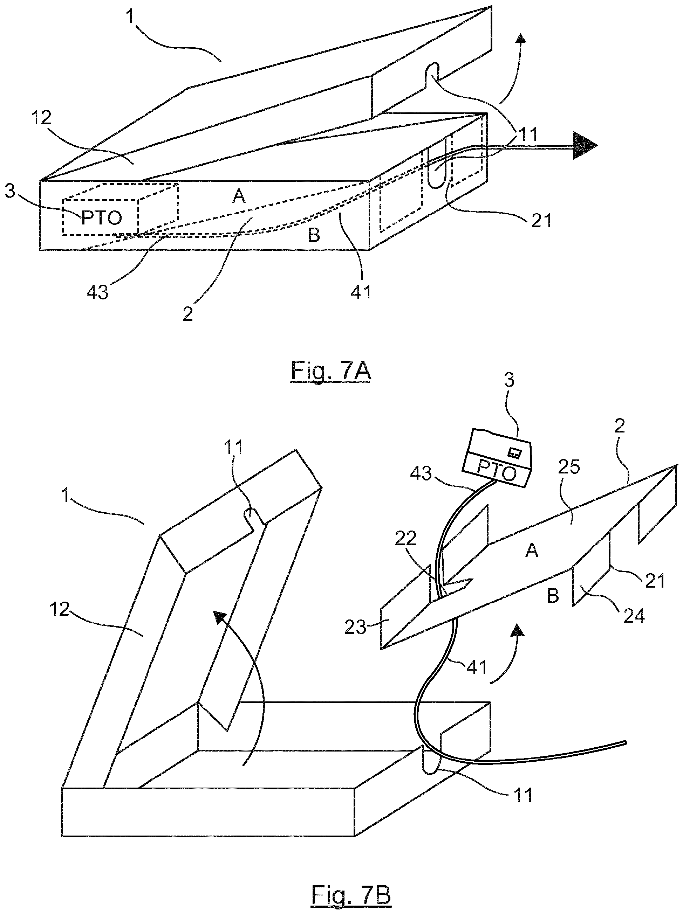

According to the embodiment of **figure 3****,** **figures 7A and 7B** illustrate a process for using the optical installation kit when the optical fiber cable 41 looped in a folded figure-8 arrangement is pulled out of the box 1. The optical fiber cable 41 end goes freely through the cover 12 and the inclined plate 2 trough the hole system 11. It allows the cable to be withdrawn at high speed with little or even no entanglement.

The second end 42 of the optical fiber 41 is pulled or pushed freely using a pulling or pushing system. Then, the optical fiber cable 41 is unwound from the first wedge-shaped storage area A. Thus, the optical fiber cable 41 is pulled out of the box without stress through the hole system 11 and the second notch 21 of the second opposite end 24 of the inclined plate 2. The figure-8 arrangement allows the optical fiber cable 41 to be unfolded without twisting.

The optical fiber cable 41 can be installed in an internal conduit up to the optical connection node without disturbing the packaging arrangement of the optical termination module 3 and without causing damages to the optical fiber cable 41.
When the whole length of optical fiber cable 41 has been pulled out, the cover 12 of the box 1 is opened to free the first end of the optical fiber cable 41 and the optical terminal module 3. As shown in **figure 7B****,** the inclined plate 2 is removed from the box 1 to easily remove the optical terminal module 3 and the optical fiber cable 41. Thus, the installation of the optical fiber cable, especially in a FTTH network, is achieved continuously from one end to the other without tearing operations or other access constraints.

## Claims

1. An optical fiber installation kit comprising a box (1), an optical fiber cable (41) and an optical termination module (3) attached to a first end (43) of the optical fiber cable,
**wherein** the box (1) surrounds a compartment that is divided by an inclined plate (2) into a first wedge-shaped storage area (B) and a second wedge-shaped storage area (A),
**wherein** the first wedge-shaped storage area (B) comprises a length of the optical fiber cable looped in a folded figure-8 arrangement in which the cross over section of the folded figure-8 arrangement is placed near a narrow part of the first wedge-shaped storage area, and
**wherein** the first end (43) of the optical fiber cable (41) is routed to the second wedge-shaped storage area (A), which comprises the optical termination module (3).

2. The optical fiber installation kit of claim 1, **wherein** the inclined plate (2) is detachably arranged into the box (1).

3. The optical fiber installation kit of claim 1 or 2**,wherein** the second wedge-shaped storage area is located between an upper lid (12) of the box and said inclined plate (2), and **wherein** said first wedge-shaped storage area is located between said inclined plate and a bottom part of the box.

4. The optical fiber installation kit of any of claims 1 to 3, **wherein** the box (1) comprises a hole system (11, 21) through which a second end (42) of the optical fiber cable (41) is pulled out of the box, said hole system being arranged in a sidewall of a wide part of the first wedge-shaped storage area.

5. The optical fiber installation kit of any of claims 1 to 4, **wherein** the inclined plate is a N-shaped plate with a medium plane part (25) and two opposite ends comprising:
- a first end (23) folded upward which comprises a first notch (22) through which the first end (43) of the optical fiber cable (41) is routed to the second wedge-shaped storage area (A);
- a second end (24) folded downward which comprises a second notch (21) through which the second end (42) of the optical fiber cable (41) is pulled out of the box through said hole system (11, 21).

6. The optical fiber installation kit of any of claims 1 to 5, **wherein** the second wedge-shaped storage area also stores at least one optical termination module accessory.

7. The optical fiber installation kit of any of claims 1 to 6, **wherein** the box and the inclined plate are made of cardboard material.

8. The optical fiber installation kit of any of claims 1 to 7, **wherein** the upper lid, the bottom part of the box and the medium plane part of the inclined plate are square-shaped.

9. A method for using an optical fiber installation kit, comprising a box, an optical fiber cable and an optical termination module attached to a first end of the optical fiber cable, wherein said method comprises:
- unwinding a length of the optical fiber cable from a first wedge-shaped storage area, comprised in a compartment surrounded by said box, said length of optical fiber cable being looped in a folded figure-8 arrangement in which the cross over section of the folded figure-8 arrangement is placed near a narrow part of the first wedge-shaped storage area,
- removing from the box an inclined plate, dividing said compartment into said first wedge-shaped storage area and a second wedge-shaped storage area,
- releasing the optical termination module attached to the first end of the optical fiber cable, which is routed to the second wedge-shaped storage area.

10. The method of claim 9, **wherein** unwinding the length of the optical fiber cable is preceded by pulling a second end of the optical fiber cable out of the box trough a hole system arranged in a sidewall of a wide part of the first wedge-shaped storage area.

11. A method of manufacturing an optical fiber installation kit, said optical fiber installation kit comprising a box, an optical fiber cable, an optical termination module attached to a first end of the optical fiber cable,
wherein it comprises:
- coiling a length of the optical fiber cable in a figure-8 arrangement with a cross over section between respective first and second looped sections of the optical fiber cable,
- folding the figure 8 arrangement at the cross over section with the first and second looped sections positioned overlapping each other,
- laying said folded figure 8 arrangement into a first wedge-shaped storage area comprised in a compartment surrounded by said box and placing the cross over section of the folded figure-8 arrangement near a narrow part of the first wedge-shaped storage area,
- arranging an inclined plate into the box, said inclined plate dividing said compartment into said first wedge-shaped storage area and a second wedge-shaped storage,
- routing the first end of the optical fiber cable to the second wedge-shaped storage.

12. The method of claim 11, **wherein,** when folding the figure 8 arrangement, a second end of the optical fiber cable is arranged between said first and second looped sections.

13. The method of claim 11 or 12, **wherein** arranging said inclined plate into the box comprises folding said plate into a N-shaped plate with a medium plane part and two opposite ends, and
- detachably arranging a first end folded upward on a back side wall of said box,;
- detachably arranging a second end folded downward on a front side wall of said box with a notch facing a hole system of said box, through which the second end of the optical fiber cable is routed out of the box,
and **wherein** routing the first end of the optical fiber cable to the second wedge-shaped storage comprises routing said first end of the optical fiber cable through another notch arranged in said first end of the N-shaped plate.

## Patentansprüche

1. Lichtwellenleiter-Installationssatz mit einem Kasten (1), einem Lichtwellenleiterkabel (41) und einem an einem ersten Ende (43) des Lichtwellenleiterkabels angebrachten optischen Abschlussmodul (3),
**wobei** der Kasten (1) ein Fach umgibt, das durch eine schräge Platte (2) in einen ersten keilförmigen Lagerbereich (B) und einen zweiten keilförmigen Lagerbereich (A) unterteilt ist,
**wobei** der erste keilförmige Lagerbereich (B) einen Abschnitt des optischen Faserkabels umfasst, der in einer gefalteten Achteranordnung geschlungen ist, wobei der Kreuzungsabschnitt der gefalteten Achteranordnung in der Nähe eines schmalen Teils des ersten keilförmigen Lagerbereichs angeordnet ist, und
**wobei** das erste Ende (43) des optischen Faserkabels (41) zu dem zweiten keilförmigen Lagerbereich (A) geführt wird, der das optische Abschlussmodul (3) umfasst.

2. Lichtwellenleiter-Installationssatz nach Anspruch 1, **wobei** die schräge Platte (2) abnehmbar in dem Kasten (1) angeordnet ist.

3. Lichtwellenleiter-Installationssatz nach Anspruch 1 oder 2, **wobei** sich der zweite keilförmige Lagerbereich zwischen einem oberen Deckel (12) des Kastens und der schrägen Platte (2) befindet, und **wobei** sich der erste keilförmige Lagerbereich zwischen der schrägen Platte und einem Bodenteil des Kastens befindet.

4. Lichtwellenleiter-Installationssatz nach einem der Ansprüche 1 bis 3, **wobei** der Kasten (1) ein Lochsystem (11, 21) aufweist, durch das ein zweites Ende (42) des Lichtwellenleiterkabels (41) aus dem Kasten herausgezogen wird, wobei das Lochsystem in einer Seitenwand eines breiten Teils des ersten keilförmigen Lagerbereichs angeordnet ist.

5. Lichtwellenleiter-Installationssatz nach einem der Ansprüche 1 bis 4, **wobei** die schräge Platte eine N-förmige Platte mit einem mittleren ebenen Teil (25) und zwei gegenüberliegenden Enden ist, die Folgendes umfassen:
- ein erstes, nach oben gefaltetes Ende (23), das eine erste Kerbe (22) aufweist, durch die das erste Ende (43) des Lichtwellenleiterkabels (41) zu dem zweiten keilförmigen Lagerbereich (A) geführt wird;
- ein zweites nach unten gefaltetes Ende (24), das eine zweite Kerbe (21) aufweist, durch die das zweite Ende (42) des Lichtwellenleiterkabels (41) durch das Lochsystem (11, 21) aus dem Kasten gezogen wird.

6. Lichtwellenleiter-Installationssatz nach einem der Ansprüche 1 bis 5, **wobei** der zweite keilförmige Lagerbereich auch mindestens ein optisches Abschlussmodul-Zubehörteil enthält.

7. Lichtwellenleiter-Installationssatz nach einem der Ansprüche 1 bis 6, **wobei** der Kasten und die schräge Platte aus Pappmaterial hergestellt sind.

8. Lichtwellenleiter-Installationssatz nach einem der Ansprüche 1 bis 7, **wobei** der obere Deckel, der Bodenteil des Kastens und der mittlere ebene Teil der schrägen Platte quadratisch geformt sind.

9. Verfahren zur Verwendung eines Lichtwellenleiter-Installationssatzes, der einen Kasten, ein Lichtwellenleiterkabel und ein an einem ersten Ende des Lichtwellenleiterkabels angebrachtes optisches Abschlussmodul umfasst, wobei das Verfahren umfasst:
- Abwickeln eines Abschnitts des Lichtwellenleiterkabels aus einem ersten keilförmigen Lagerbereich, der in einem von dem Kasten umgebenen Fach enthalten ist, wobei der Abschnitt des Lichtwellenleiterkabels in einer gefalteten Achteranordnung geschlungen ist, bei der der Kreuzungsabschnitt der gefalteten Achteranordnung in der Nähe eines schmalen Teils des ersten keilförmigen Lagerbereichs angeordnet ist,
- Entfernen einer schrägen Platte aus dem Kasten, die das Fach in den ersten keilförmigen Lagerbereich und einen zweiten keilförmigen Lagerbereich unterteilt,
- Freigeben des optischen Abschlussmoduls, das am ersten Ende des optischen Faserkabels befestigt ist, das zum zweiten keilförmigen Lagerbereich geführt wird.

10. Verfahren nach Anspruch 9, **wobei** dem Abwickeln des Abschnitts des Lichtwellenleiterkabels das Herausziehen eines zweiten Endes des Lichtwellenleiterkabels aus dem Kasten durch ein Lochsystem vorausgeht, das in einer Seitenwand eines breiten Teils des ersten keilförmigen Lagerbereichs angeordnet ist.

11. Verfahren zur Herstellung eines Lichtwellenleiter-Installationssatzes, wobei der Lichtwellenleiter-Installationssatz einen Kasten, ein Lichtwellenleiterkabel und ein an einem ersten Ende des Lichtwellenleiterkabels angebrachtes optisches Abschlussmodul umfasst,
wobei es umfasst:
- Aufwickeln eines Abschnitts des Lichtwellenleiterkabels in einer Achteranordnung mit einem Kreuzungsabschnitt zwischen einem ersten und einem zweiten geschlungenen Abschnitt des Lichtwellenleiterkabels,
- Falten der Achteranordnung an dem Kreuzungsabschnitt, wobei der erste und der zweite geschlungene Abschnitt einander überlappen,
- Legen der gefalteten Achteranordnung in einen ersten keilförmigen Lagerbereich, der in einem von dem Kastenumgebenen Fach enthalten ist, und Anordnen des Kreuzungsabschnitts der gefalteten Achteranordnung in der Nähe eines schmalen Teils des ersten keilförmigen Lagerbereichs,
- Anordnen einer schrägen Platte in dem Kasten, wobei die schräge Platte das Fach in den ersten keilförmigen Lagerbereich und einen zweiten keilförmigen Lagerbereich unterteilt,
- Verlegen des ersten Endes des optischen Faserkabels in den zweiten keilförmigen Lagerbereich.

12. Verfahren nach Anspruch 11, **wobei** beim Falten der Achteranordnung ein zweites Ende des Lichtwellenleiterkabels zwischen dem ersten und dem zweiten geschlungenen Abschnitt angeordnet wird.

13. Verfahren nach Anspruch 11 oder 12, **wobei** das Anordnen der schrägen Platte in dem Kasten das Falten der Platte zu einer N-förmigen Platte mit einem mittleren ebenen Teil und zwei gegenüberliegenden Enden umfasst, und
- abnehmbares Anordnen eines ersten, nach oben gefalteten Endes an einer Rückwand der Schachtel;
- das abnehmbare Anordnen eines zweiten Endes, das nach unten gefaltet ist, an einer vorderen Seitenwand des Kastens mit einer Kerbe, die einem Lochsystem des Kastens zugewandt ist, durch das das zweite Ende des optischen Faserkabels aus dem Kasten herausgeführt wird,
und **wobei** das Führen des ersten Endes des Lichtwellenleiterkabels zu dem zweiten keilförmigen Lagerbereich das Führen des ersten Endes des Lichtwellenleiterkabels durch eine weitere Kerbe umfasst, die in dem ersten Ende der N-förmigen Platte angeordnet ist.

## Revendications

1. Kit d'installation de fibre optique comprenant une boîte (1), un câble de fibre optique (41) et un module de terminaison optique (3) fixé à une première extrémité (43) du câble de fibre optique,
**dans lequel** la boîte (1) entoure un compartiment qui est divisé par une plaque inclinée (2) en une première zone de stockage en forme de coin (B) et une deuxième zone de stockage en forme de coin (A),
**dans lequel** la première zone de stockage en forme de coin (B) comprend une longueur du câble de fibre optique en boucle dans un agencement en 8 plié dans lequel la section transversale de l'agencement en 8 plié est placée près d'une partie étroite de la première zone de stockage en forme de coin, et
**dans lequel** la première extrémité (43) du câble de fibre optique (41) est acheminée vers la deuxième zone de stockage en forme de coin (A) qui comprend le module de terminaison optique (3).

2. Kit d'installation de fibre optique selon la revendication 1, **dans lequel** la plaque inclinée (2) est agencée de manière amovible dans la boîte (1).

3. Kit d'installation de fibre optique selon la revendication 1 ou 2, **dans lequel** la deuxième zone de stockage en forme de coin est située entre un couvercle supérieur (12) de la boîte et de ladite plaque inclinée (2), et **dans lequel** ladite première zone de stockage en forme de coin est située entre ladite plaque inclinée et une partie fond de la boîte.

4. Kit d'installation de fibre optique selon l'une des revendications 1 à 3, **dans lequel** la boîte (1) comprend un système de trou (11, 21) à travers lequel une deuxième extrémité (42) du câble de fibre optique (41) est tirée hors de la boîte, ledit système de trou étant agencé dans une paroi latérale d'une partie large de la première zone de stockage en forme de coin.

5. Kit d'installation de fibre optique selon l'une des revendications 1 à 4, **dans lequel** la plaque inclinée est une plaque en forme de N avec une partie plane médiane (25) et deux extrémités opposées comprenant :
- une première extrémité (23) pliée vers le haut qui comprend une première encoche (22) à travers laquelle la première extrémité (43) du câble de fibre optique (41) est acheminée vers la deuxième zone de stockage en forme de coin (A) ;
- une deuxième extrémité (24) pliée vers le bas qui comprend une deuxième encoche (21) à travers laquelle la deuxième extrémité (42) du câble de fibre optique (41) est tirée hors de la boîte à travers ledit système de trou (11, 21).

6. Kit d'installation de fibre optique selon l'une des revendications 1 à 5, **dans lequel** la deuxième zone de stockage en forme de coin stocke également au moins un accessoire de module de terminaison optique.

7. Kit d'installation de fibre optique selon l'une des revendications 1 à 6, **dans lequel** la boîte et la plaque inclinée sont réalisés en carton.

8. Kit d'installation de fibre optique selon l'une des revendications 1 à 7, **dans lequel** le couvercle supérieur, la partie fond de la boîte et la partie plane médiane de la plaque inclinée sont de forme carrée.

9. Procédé d'utilisation d'un kit d'installation de fibre optique, comprenant une boîte, un câble de fibre optique et un module de terminaison optique fixé à une première extrémité du câble de fibre optique, **dans lequel** ledit procédé comprend :
- le déroulement d'une longueur du câble de fibre optique d'une première zone de stockage en forme de coin comprise dans un compartiment entouré par ladite boîte, ladite longueur de câble de fibre optique étant en boucle dans un agencement en 8 plié dans lequel la section transversale de l'agencement en 8 plié est placée près d'une partie étroite de la première zone de stockage en forme de coin,
- le retrait de la boîte une plaque inclinée, divisant ledit compartiment en ladite première zone de stockage en forme de coin et une deuxième zone de stockage en forme de coin,
- la libération du module de terminaison optique fixé à la première extrémité du câble de fibre optique, qui est acheminé vers la deuxième zone de stockage en forme de coin.

10. Procédé selon la revendication 9, **dans lequel** le déroulement de la longueur du câble de fibre optique a lieu après avoir tiré une deuxième extrémité du câble de fibre optique hors de la boîte à travers un système de trou agencé dans une paroi latérale d'une partie large de la première zone de stockage en forme de coin.

11. Procédé de fabrication d'un kit d'installation de fibre optique, ledit kit d'installation de fibre optique comprenant une boîte, un câble de fibre optique, un module de terminaison optique fixé à une première extrémité du câble de fibre optique,
**dans lequel** il comprend :
- l'enroulement d'une longueur du câble de fibre optique dans un agencement en 8 avec une section transversale entre des première et deuxième sections en boucle respectives du câble de fibre optique,
- le pliage de l'agencement en 8 à la section transversale avec les première et deuxième sections en boucle positionnées de manière à se chevaucher,
- la pose dudit agencement en 8 plié dans une première zone de stockage en forme de coin comprise dans un compartiment entouré par ladite boîte et le placement de la section transversale de l'agencement en 8 plié près d'une partie étroite de la première zone de stockage en forme de coin,
- l'agencement d'une plaque inclinée dans la boîte, ladite plaque inclinée divisant ledit compartiment en ladite première zone de stockage en forme de coin et un deuxième stockage en forme de coin,
- l'acheminement de la première extrémité du câble de fibre optique vers le deuxième stockage en forme de coin.

12. Procédé selon la revendication 11, **dans lequel,** lors du pliage de l'agencement en 8, une deuxième extrémité du câble de fibre optique est agencée entre lesdites première et deuxième sections en boucle.

13. Procédé selon la revendication 11 ou 12, **dans lequel** l'agencement de ladite plaque inclinée dans la boîte comprend le pliage de ladite plaque en une plaque en forme de N avec une partie plane médiane et deux extrémités opposées, et
- l'agencement de manière amovible d'une première extrémité pliée vers le haut sur une paroi latérale arrière de ladite boîte, ;
- l'agencement de manière amovible d'une deuxième extrémité pliée vers le bas sur une paroi latérale avant de ladite boîte avec une encoche faisant face à un système de trou de ladite boîte à travers lequel la deuxième extrémité du câble de fibre optique est acheminée hors de la boîte,
et **dans lequel** l'acheminement de la première extrémité du câble de fibre optique vers le deuxième stockage en forme de coin comprend l'acheminement de ladite première extrémité du câble de fibre optique à travers une autre encoche agencée dans ladite première extrémité de la plaque en forme de N.
